# EUROPÄISCHE PATENTSCHRIFT

(11) **EP 1 394 523 B1**
(45) Veröffentlichungstag und Bekanntmachung des Hinweises auf die Patenterteilung: **20.09.2006**
(21) Anmeldenummer: 03018181.2
(22) Anmeldetag: 09.08.2003
(51) Int. Cl.: G01L 15/00, G01L 27/00

(54) **Verfahren zum Betrieb eines Totaldrucktransmitters**
Method for operating a total pressure transmitter
Méthode de mise en oeuvre d'un transmetteur à pression totale

(30) Priorität: 24.08.2002 DE 10238961
(43) Veröffentlichungstag der Anmeldung: 03.03.2004
(73) Patentinhaber: Pfeiffer Vacuum GmbH, 35614 Asslar (DE)
(72) Erfinder: Schopphoff, Andreas, 35614 Asslar (DE)

(56) Entgegenhaltungen:
- DE-A- 19 860 500
- US-A- 4 755 669
- US-A- 5 583 297

## Beschreibung

Die Erfindung betrifft ein Verfahren zum Betrieb eines Totaldrucktransmitters nach dem Oberbegriff des 1. Schutzanspruches.

Ein Totaldrucktransmitter zum Erfassen und Übermitteln von Gasdrücken, z. B. aus dem Vakuumbereich, besteht aus Sensorelementen und anschließender Elektronik zum Bearbeiten der Messwerte. Die Anzeige erfolgt in der Regel extern, d. h. sie ist im Transmitter nicht integriert. Zur Erfassung eines weiteren Druckbereiches, insbesondere im Bereich der Vakuumtechnik, werden mehrere Messprinzipien, welche auf unterschiedlichen physikalischen Effekten beruhen, angewandt. Diese unterscheiden sich normaler Weise u. a. in ihrer Gasart- und Temperaturabhängigkeit. Die Druckbereiche für den Einsatz von Sensoren unterschiedlicher Funktionsweise überlappen sich zum Teil. Diese Übergangsbereiche werden zum Abgleich der Kalibrierungen beider Messsysteme genutzt. Hier ergeben sich jedoch Sprünge in den Kennlinien der beiden Sensoren, welche durch die verschiedenen physikalischen Effekte, auf denen die Messmethoden beruhen, bedingt sind. Z. B. sind die Effekte gasartabhängig, aber in unterschiedlichem Maße.

Zum Einsatz kommen z. B. Wärmeleitungsmessröhren, als "Pirani"-Messröhren bekannt, welche als Sensoren in einem Druckbereich von 10⁻³ bis 1000 mbar ein gesetzt werden. Der sich nach niedrigeren Drücken anschließende Bereich kann durch Heißkathoden, z. B. nach "Bayard-Alpert", oder durch Kaltkathodensysteme, z. B. nach "Penning", erfasst werden.

Für viele Anwendungen, z. B. bei Sputteranlagen, ist eine kontinuierliche und genaue Druckmessung gerade in dem Übergangsbereich der Einsatzgebiete unterschiedlicher Messmethoden wichtig. Für den praktischen Betrieb bedeutet dies, dass neben dem Pirani-Sensor in diesem Messbereich zusätzlich der Heißkathodensensor eingeschaltet ist. Ein ständiger Betrieb des Heißkathodensensors bringt neben einer Beeinträchtigung des gesamten Messsystems und des Prozesses auch eine Verringerung der Standzeit mit sich. Diese spielt bei Vakuumprozessen eine entscheidende Rolle. Eine Erhöhung der Standzeit ist gleichbedeutend mit einer Erhöhung der Effizienz der Anlage.

Der Erfindung liegt die Aufgabe zu Grunde, ein Verfahren zum Betrieb eines Totaldrucktransmitters vorzustellen, mit dem es möglich wird, Vakuumdrücke von Atmosphärendruck bis in den Bereich von ca. 10⁻³ mbar kontinuierlich und reproduzierbar zu messen und gleichzeitig die Standzeit des Totaldrucktransmitters zu erhöhen.

Die Aufgabe wird durch die kennzeichnenden Merkmale des 1. Schutzanspruches gelöst. Die Ansprüche 2 - 3 stellen weitere Ausgestaltungsformen der Erfindung dar.

Das erfindungsgemäße Verfahren ermöglicht eine genaue und reproduzierbare Druckmessung von Atmosphärendruck bis in den Ultrahochvakuumbereich mit einem einzigen Totaldrucktransmitter, bestehend aus zwei Sensorelementen. Im höheren Druckbereich erfolgt die Druckmesswerterfassung z. B. mit einem Wärmeleitungssensor nach dem Prinzip von Pirani. Der Messbereich kann bis in den Bereich von ca. 10⁻⁴ mbar nach niedrigeren Drücken hin ausgeweitet werden, wenn der untere Bereich noch zuverlässige Werte liefert. Dies wird erreicht, indem das zweite Sensorelement, welches z. B. als Heißkathodensensor ausgebildet ist, zur Kalibrierung benutzt wird. Da die Kalibrierung nicht ständig erfolgen muss, kann das zweite Sensorelement in der Regel in diesem Übergangsbereich ausgeschaltet sein. Es genügt, wenn z. B. nach vollzogenen Servicearbeiten, wie Targetwechsel der Anlage, die Heißkathode eingeschaltet wird, bei dieser Gelegenheit gleichzeitig das erste Sensorelement zu kalibrieren. Eine solche Rejustierung geschieht automatisch nach einem an sich bekannten Verfahren (DE-OS 198 60 500). Die Messgenauigkeit kann mit dem erfindungsgemäßen Verfahren erheblich verbessert werden.

## Patentansprüche

1. Verfahren zum Betrieb eines Totaldrucktransmitters, wobei ein erstes Sensorelement zur Messwerterfassung in einem ersten Druckbereich und ein zweites Sensorelement zur Messwerterfassung in einem zweiten, nach niedrigeren Drücken sich anschließenden Druckbereich vorgesehen sind und sich die beiden Druckbereiche in einem Übergangsbereich überschneiden, **dadurch gekennzeichnet, dass** in dem ersten Druckbereich ausschließlich das erste Sensorelement benutzt wird, während das zweite Sensorelement die meiste Zeit außer Betrieb ist und dass in gewissen zeitlichen Abständen das zweite Sensorelement eingeschaltet wird und mit diesem dann das erste Sensorelement im unteren Messbereich kalibriert wird.

2. Verfahren nach Anspruch 1, **dadurch gekennzeichnet, dass** als erstes Sensorelement ein Wärmeleitungssensor verwendet wird.

3. Verfahren nach Anspruch 1 oder 2, **dadurch gekennzeichnet, dass** als zweites Sensorelement ein Heißkathodensensor verwendet wird.

## Claims

1. Method for operating a total pressure transmitter, wherein a first sensor element is provided for acquiring measured values in a first pressure range and a second sensor element is provided for acquiring measured values in a second pressure range adjoining in the lower pressure direction, and the two pressure ranges overlap in a transition range, **characterised in that** only the first sensor element is used in the first pressure range, while the second sensor element is out of operation for most of the time, and **in that** the second sensor element is turned on at specific time intervals and the first sensor element is then calibrated with this in the lower measuring range.

2. Method according to Claim 1, **characterised in that** a heat conduction sensor is used as the first sensor element.

3. Method according to Claim 1 or 2, **characterised in that** a hot cathode sensor is used as the second sensor element.

## Revendications

1. Procédé de mise en oeuvre d'un transmetteur de pression totale, dans lequel un premier capteur est prévu pour l'enregistrement des mesures dans une première plage de pression et un deuxième capteur pour l'enregistrement des mesures dans une deuxième plage de pression venant à la suite de pressions inférieures, les deux plages se chevauchant dans une plage de transition, **caractérisé en ce que** dans la première plage de pression, seul le premier capteur est mis en oeuvre tandis que le deuxième capteur est hors service la plupart du temps, et **en ce que**, par intervalles de temps déterminés, le deuxième capteur est mis en marche et que celui-ci est alors utilisé pour calibrer le premier capteur dans la plage de mesure inférieure.

2. Procédé selon la revendication 1, **caractérisé en ce que** le premier capteur est une jauge de conductibilité thermique.

3. Procédé selon la revendication 1 ou 2, **caractérisé en ce que** le deuxième capteur est un capteur à cathode chaude.
